# EUROPÄISCHE PATENTSCHRIFT

(11) **EP 1 099 490 B1**
(45) Veröffentlichungstag und Bekanntmachung des Hinweises auf die Patenterteilung: **26.11.2003**
(21) Anmeldenummer: 00119188.1
(22) Anmeldetag: 05.09.2000
(51) Int. Cl.: B21C 37/12, B23D 21/00

(54) **Vorrichtung zum Trennen von Rohren**
Tube cutting machine
Dispositif pour couper des tubes

(30) Priorität: 17.09.1999 DE 19944696
(43) Veröffentlichungstag der Anmeldung: 16.05.2001
(73) Patentinhaber: Drossbach GmbH & Co. KG, 86641 Rain am Lech (DE)
(72) Erfinder: Dietrich, Karl, 86641 Rain am Lech (DE)
(74) Vertreter: Gossel, Hans K., Dipl.-Ing.

(56) Entgegenhaltungen:
- EP-A- 0 826 467
- US-A- 2 547 375
- US-A- 5 074 018

## Beschreibung

Die Erfindung betrifft eine Vorrichtung zum Trennen von sich um ihre Achse drehenden Rohre, vorzugsweise zum Abtrennen von Rohrabschnitten von Wickelfalzrohren von einem in der Herstellung befindlichen Rohrstrang (siehe z.B. US-A 2 547 375).

Mit Wickelfalzrohrmaschinen werden aus Metallbändem, die von Bandrollen halternden Haspeln abgewickelt werden, Wickelfalzrohre hergestellt. Bei dieser Herstellung wird das Metallband, das beispielsweise aus blankem Stahlblech, verzinktem Stahlblech, Aluminium oder Inox bestehen kann, in einem Walzenstuhl profiliert. Das profilierte Metallband wird sodann um eine rotierende Büchse gelegt und die durch die Profilierung angeformte Sicke und der angeformte Falz laufen ineinander und werden von Druckrollen umgelegt und vollständig zu einer Falz geschlossen. Das derart auf der Büchse gebildete Rohr wird sodann durch Abdrückrollen von der Büchse abgeschoben. Von dem in einer bekannten Wickelfalzrohrmaschine hergestellten Rohr, das aus wendelförmig gewickelten Metallbändern besteht, die an ihren Rändern durch einen Falz miteinander verbunden sind, werden sodann durch eine Trennvorrichtung der eingangs angegebenen Art Rohrabschnitte abgetrennt. Die abgetrennten Rohrabschnitte werden sodann abgekippt und abgefördert.

Es ist bekannt, von einem in der Herstellung befindlichen Wickelfalzrohr durch eine mitlaufende Trennscheibe Rohrabschnitte abzutrennen, die jedoch mangelhafte Schnitte ausführt. Die Trennscheibe erzeugt aufgrund ihrer hohen Geschwindigkeit eine so hohe Reibung, daß das Rohrmaterial bis in den plastischen Zustand erwärmt wird und es daher zu einem Schmieren und Graten kommt, die in einem besonderen Arbeitsgang entfernt werden müssen. Weiterhin wird durch die durch die Trennscheibe erzeugte Wärme auch die Zinkschicht beschädigt, was höchst unerwünscht ist.

Aufgabe der Erfindung ist es daher, eine Vorrichtung der eingangs angegebenen Art zu schaffen, mit der sich von einem Rohr sauber und ohne Bildung von Graten Rohrabschnitte abtrennen lassen. Dabei soll bei dem Abtrennen auch eine Wärmeentwicklung verhindert werden, die Beschichtungen des Rohrs beschädigen kann.

Erfindungsgemäß wird diese Aufgabe durch einen quer zur Rohrachse auf Führungen hin- und herverfahrbaren Schlitten gelöst, auf dem in der Trennebene ein Fräser und eine Schere gehaltert sind, die durch gesteuerte Antriebe unabhängig voneinander in Richtung auf das Rohr und zurück verfahrbar sind.

Bei der erfindungsgemäßen Vorrichtung führt der Fräser den in einer Durchmesserebene des Rohres liegenden Anschnitt aus, in den anschließend die Schere eintaucht und nach Zurückfahren des Fräsers den Rundschnitt ausführt.

Der Fräser ist zweckmäßigerweise ein Stiftfräser, der in idealer Weise den Anschnitt auszuführen vermag.

Die Schere besteht vorzugsweise aus zwei gabelförmig angeordneten, an den Rohrmantel anstellbaren Backen, zwischen die eine den Rohrmantel durchsetzende Schneidzunge eintaucht. Die Schneidzunge schneidet aus dem Rohrmantel ein ihrer Breite entsprechendes Band aus, das beim Schneiden zu einer Rolle aufgewickelt wird, die nach Beendigung des Schnitts herabfällt und einem Abfallkorb zugeführt wird.

Zweckmäßigerweise ist die den Fräser und die Schere mit ihren An- und Abstelleinrichtungen halternde Einheit auf einem parallel zur Rohrachse verfahrbaren Schlitten angeordnet. Dieser Schlitten, der auf dem quer verschieblichen Schlitten geführt ist, fährt mit dem Rohr mit dessen Vorschubgeschwindigkeit mit, so daß ein sauberer in einer Durchmesserebene liegender Schnitt ausgeführt werden kann.

Die den Fräser und die Schere mit ihren An- und Abstelleinrichtungen haltemde Einrichtung kann auch auf einem quer zur Rohrachse verfahrbaren Schlitten angeordnet sein, der seinerseits auf einem parallel zur Rohrachse verschieblichen Schlitten geführt ist.

In weiterer Ausgestaltung der Erfindung ist eine Steuerung vorgesehen, die den Fräser vor der Schere derart in den Einsatz bringt, daß dieser den Falz durchtrennt und anschließend die Schere in den gefrästen Schlitz einführt, die nach dem Zurückfahren des Fräsers den falzfreien Umfangsteil des Rohrmantels durchtrennt. In dem Falz befinden sich vier Lagen des Bandmaterials, die die Schere üblicherweise nicht zu durchtrennen vermag. Aus diesem Grunde wird der den Anschnitt ausführende Fräser kurz vor dem Falz eingesetzt, so daß dieser diesen durchtrennt und die Schere nur noch das einlagige Mantelmaterial des Rohrs zu schneiden braucht.

Die Steuerung verfährt den parallel zum Rohr verfahrbaren Schlitten mit der Rohrgeschwindigkeit.

Nach einer bevorzugten Ausführungsform ist vorgesehen, daß das Rohr während des Eindringens des Fräsers in den Rohrmantel stillsteht oder sich nur mit verringerter Produktionsgeschwindigkeit dreht und in axialer Richtung bewegt. Auf diese Weise ist ein gutes Eindringen und ein guter Anschnitt gewährleistet. Die Produktionsgeschwindigkeit wird nach dem Eindringen des Fräsers durch den Rohrmantel zweckmäßigerweise wieder erhöht.

In weiterer Ausgestaltung der Erfindung wird die Produktionsgeschwindigkeit bei dem Schneiden mit der Schere gegenüber der Geschwindigkeit beim Schneiden mit dem Fräser weiter erhöht. Die Produktionsgeschwindigkeit während des Schneidens mit der Schere liegt zweckmäßigerweise immer noch unter der Produktionsgeschwindigkeit zwischen den Schneidvorgängen.

Die Steuerung der Schneidvorrichtung besteht vorzugsweise aus einem Rechner, beispielsweise einer SPS-Steuerung. Nach einer besonders bevorzugten Ausführungsform ist vorgesehen, daß die Steuerung den Einsatz des Fräsers und der Schere und die Geschwindigkeit der den Fräser und die Schere tragenden Schlitten in Abhängigkeit von der Geschwindigkeit des in die Wickelfalzrohrmaschine einlaufenden Metallbandes steuert. Aus der Einlaufgeschwindigkeit des Metallbandes läßt sich sehr genau die Drehzahl des Rohres und die Geschwindigkeit des Rohres in axialer Richtung errechnen, so daß diese von der Recheneinheit errechneten Werte zur Steuerung des Fräsers und der Schere sowie der diese tragenden Schlitten verwendet werden kann.

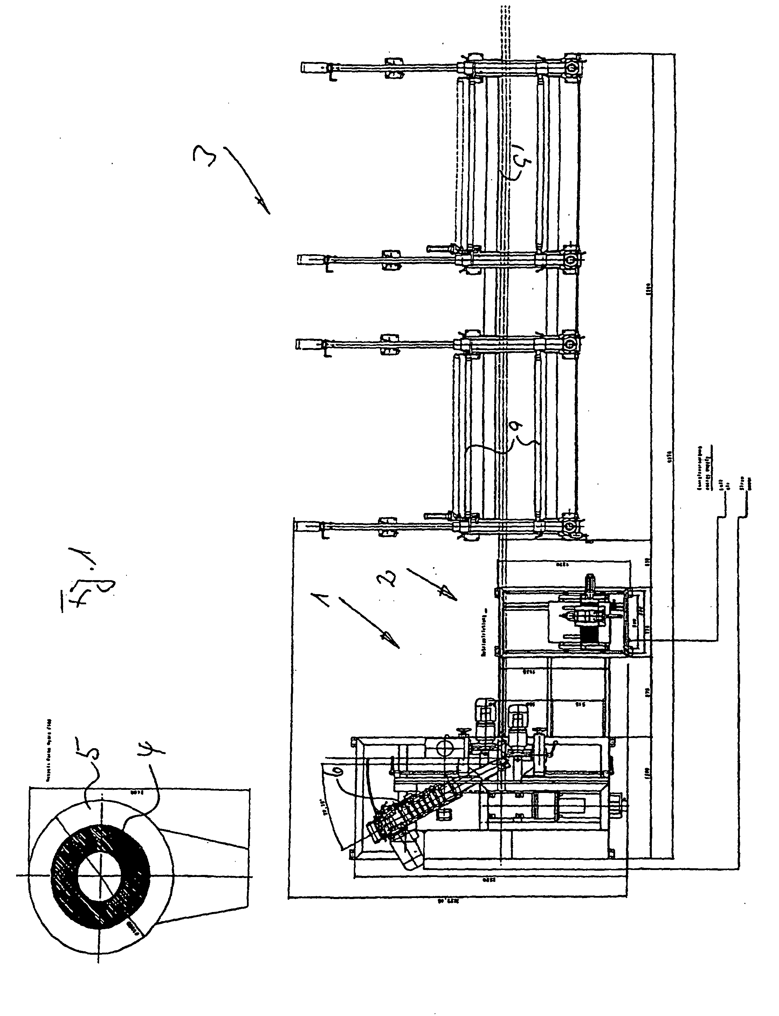

Ein Ausführungsbeispiel der Erfindung wird nachstehend anhand der Zeichnung näher erläutert. In dieser zeigt
- Fig. 1: eine Draufsicht auf eine Wickelfalzrohranlage bestehend aus einer Wickelfalzrohrmaschine, einer Trennvorrichtung und einem Rohrablaufbock,
- Fig. 2: eine Seitenansicht der Anlage nach Fig. 1,
- Fig. 3: eine vergrößerte Draufsicht auf die Trennvorrichtung,
- Fig. 4: einen Schnitt durch die Trennvorrichtung längs der Linie A-A in Fig. 3 und
- Fig. 5: eine Ansicht der Trennvorrichtung in Richtung des Pfeils B in Fig. 4.

Die Wickelfalzrohranlage besteht aus einer Wickelfalzrohrmaschine 1, einer Trennvorrichtung 2 und einem Rohrablaufbock 3, die der Wickelfalzrohrmaschine nachgeschaltet sind. Das in der Wickelfalzrohrmaschine verarbeitete Metallband wird von einer Bandrolle 4 abgewickelt, die in einer schematisch dargestellten Haspel 5 gespeichert ist. Das abgewickelte Metallband wird in einem Walzenstuhl 6 profiliert, und zwar in der Weise, daß ein Rand hochgestellt und der andere Rand mit einer Sicke versehen wird, die dann auf eine rotierende Büchse in der Weise auflaufen, daß die Sicke den hochgestellten Rand übergreift und beide sodann durch Druckrollen zu einem Falz umgelegt werden können, der das gewendelte Metallband zu einem Rohr verbindet. Die Wickelfalzrohrmaschine ist bekannter Bauart und wird daher hier nicht näher erläutert.

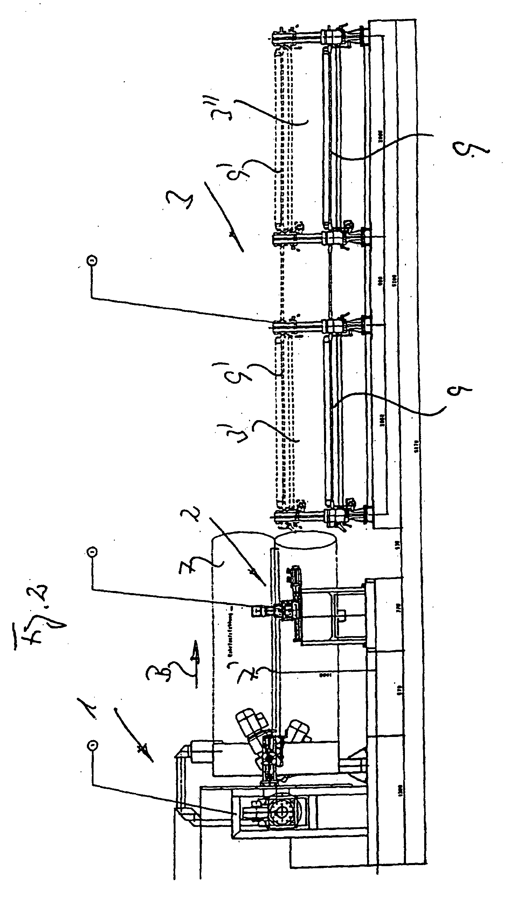

Das in der Wickelfalzrohrmaschine 1 produzierte Wickelfalzrohr 7, das in Fig. 2 mit zwei Durchmessern, 7, 7' dargestellt ist, wandert aus dieser in Produktionsrichtung B heraus und wird dabei an der Trennvorrichtung 2 vorbeigeführt. Das die Trennvorrichtung 2 passierende Wickelfalzrohr 7, 7' läuft dann in den Rohrablaufbock 3 ein, der aus zwei Teilen 3', 3" besteht. Die Teile 3', 3" sind in der Weise miteinander gekoppelt, daß sie beispielsweise Rohrabschnittlängen bis zu 6 m aufnehmen können. Die das Rohr bzw. die Rohrabschnitte tragenden Einrichtungen, beispielsweise Walzen 9, können in der dargestellten Weise auch auf den kleinsten Rohrdurchmesser 9', wie gestrichelt angedeutet ist, eingestellt werden. Die durch die Trennvorrichtung abgetrennten Rohrabschnitte werden dann aus dem Rohrablaufbock 3 abgeführt und einem nicht dargestellten Ablagetisch übergeben.

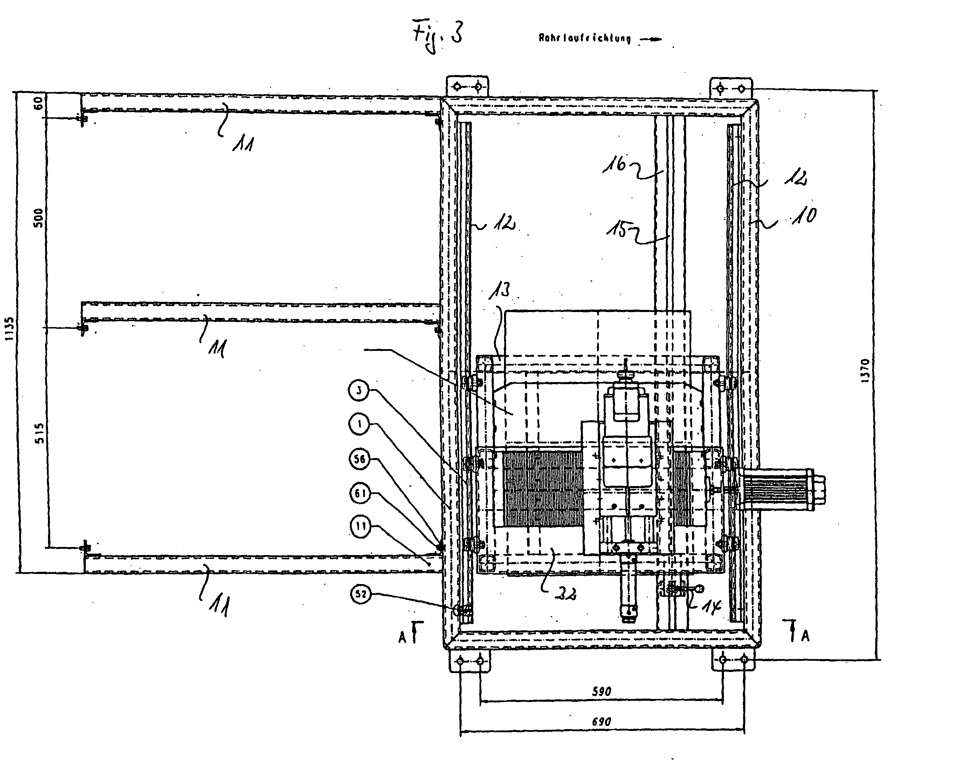

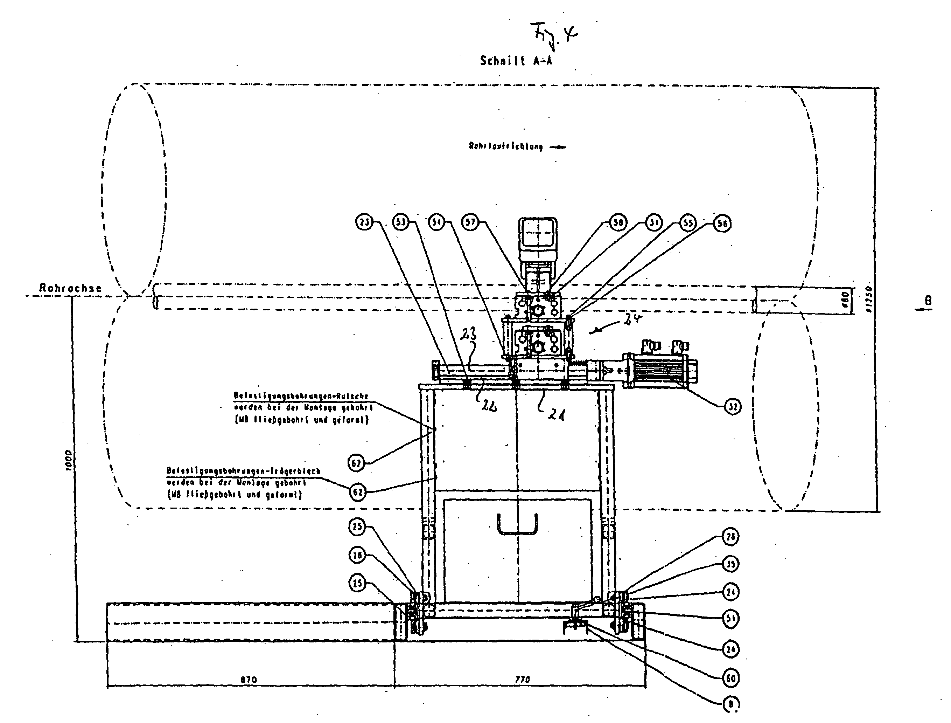

Anhand der Fig. 3 bis 5 wird nun die Trennstation 2 näher beschrieben. Diese besteht aus einem Grundrahmen 10, der durch Träger 11 mit dem Gestell der Wikkelfalzrohrmaschine verbunden ist. In dem Grundrahmen 10 sind an den seitlichen Holmen zueinander parallele Schienen 12 befestigt, auf denen ein Wagen 13 über Rollen verschieblich geführt ist, so daß sich dieser auf unterschiedliche Durchmesser der hergestellten Wickelfalzrohre einstellen läßt. In der eingestellten Stellung wird der Wagen 13 durch einen Handhebel 14 fixiert, durch den ein in einer hinterschnittenen Nut 15 eines mit den Querholmen des Rahmens verbundenen Trägers 16 geführtes Klemmstück an den Träger 16 angeklemmt wird.

Der Wagen 13 trägt ein tischartiges Gestell 20, auf dessen Tischplatte 21 parallel zu den Schienen 12 verlaufende Führungen angeordnet sind, auf denen ein Schlitten 22 hin- und herverschieblich geführt ist.

Der Schlitten 22 ist mit Führungen 23 versehen, die quer zu den Schienen 12 verlaufen. Auf den Führungen 23 ist eine Verschiebeeinheit 24 verschieblich geführt, die somit parallel zu der Achse der Rohre 7, 7' über einen Synchronmotor 32 und ein Getriebe parallel zu dem produzierten Rohr mit der jeweiligen Produktionsgeschwindigkeit verschoben werden kann. Auf der Verschiebeeinheit 24 ist einerseits ein Fräser 26, bei dem es sich um einen Schaftfräser handeln kann, mit zugehörigem Antriebsmotor 27 und Getriebeeinheit und zum anderen die Schere 28 gehaltert.

Der Fräser 26 wird durch einen Drehstrommotor 27 angetrieben, der Drehzahlen bis zum 25000/min aufweisen kann.

Bei der Schere 28 handelt es sich um eine handelsübliche Schere mit zwei an den Rohrmantel 29 anstellbaren gabelförmigen Backen 30 zwischen die eine den Rohrmantel 29 durchsetzende Schneidzungen 31 eintaucht, die mit hoher Frequenz hin- und herschwingend angetrieben ist.

Die Fräseinheit 26, 27 ist über ein Tragstück 32 mit einer Buchse 33 verbunden. Die Schere 28 ist über einen Halter 34 mit der Buchse 35 verbunden. Die Buchsen 33, 35 sind durch Antriebseinrichtungen unabhängig voneinander auf Linearführungen 36, 37 in Richtung auf das Rohr 7, 7' verfahrbar und von diesem abrückbar.

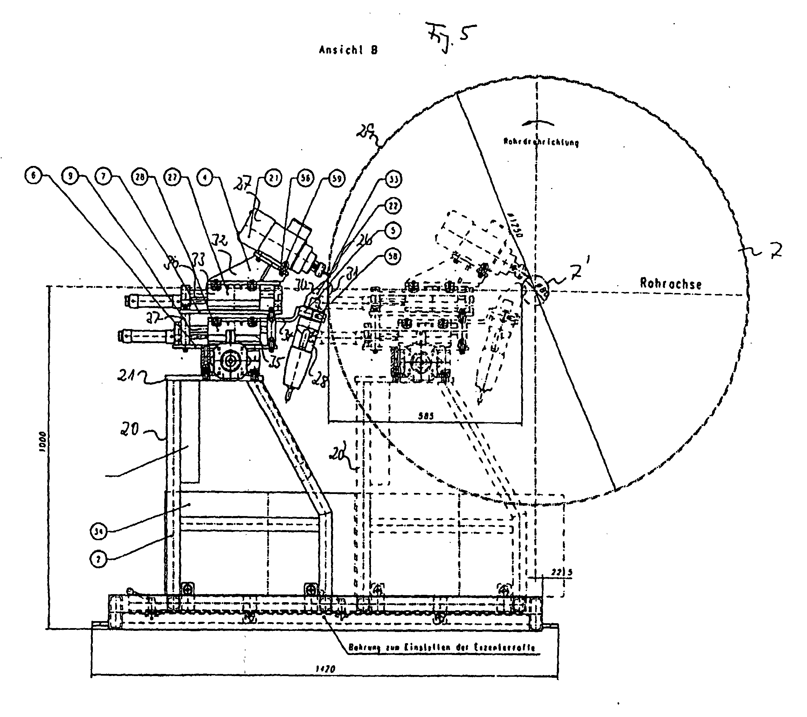

Wie aus Fig. 5 ersichtlich ist, lassen sich der Fräser 26 und die Schere 28 durch Verfahren des tischartigen Gestells 20 von dem größten Durchmesser des Rohrs 7 auf den kleinsten Durchmessers des Rohrs 7' einstellen.

Die Steuerung der Trennvorrichtung erfolgt durch einen Prozeßrechner, der die Steuerungsdaten von der Zulaufgeschwindigkeit des Metallbands ableitet, die entsprechend der jeweils optimalen Schnittgeschwindigkeit des Fräsers und der Schere gesteuert wird.

Das Abtrennen des Rohrabschnitts von dem in Produktion befindlichen Rohrstrang erfolgt grundsätzlich in folgenden Schritten:

Zu dem Beginn des Schnitts wird die Produktionsgeschwindigkeit bis auf 0, zumindest aber bis auf eine stark verringerte Produktionsgeschwindigkeit, zurückgefahren.

Anschließend wird der Hochleistungsfräser 26 gegen das Rohr vorgefahren, so daß dieser dessen Mantel durchdringt. Dabei erfolgt die Anschnittstelle dicht vor einem Falz.

Die Rohrproduktion wird anschließend wieder aufgenommen, so daß sich das Rohr mit langsamer Geschwindigkeit dreht und vorgeschoben wird. Der Fräser 26 fährt in axialer Richtung mit Rohrgeschwindigkeit mit und schneidet in den Rohrmantel einen Umfangsschlitz ein, der auch den Falz durchtrennt. Der den Fräser und die Schere tragende Schlitten bewegt sich in axialer Richtung synchron mit dem Rohr mit.

Anschließend wird die Schere eingeschaltet und fährt in den von dem Fräser vorgeschnittenen Schlitz in der Weise hinein, daß die Zunge 31 den Rohrmantel durchdringt und sich die Backen 30 von außen her auf dem Rohrmantel anlegen. Die Schere wird durch dieses Einfahren in den Schlitz zentriert.

Das Rohr läuft mit langsamer Geschwindigkeit weiter, wobei die Fräseinheit zurückfährt und die Schere den Schnitt über den falzfreien restlichen Rohrumfang bei erhöhter Rohrgeschwindigkeit und somit Produktionsgeschwindigkeit ausführt.

Nach einer vollen Rohrumdrehung, also dem Abtrennen des Rohrabschnitts, bleibt das Rohr durch Unterbrechung der Produktion stehen. Die Rohrtrennvorrichtung fährt sodann zunächst quer zur Rohrachse und anschließend in axialer Richtung in ihre Ausgangsposition zurück.

Der auf dem Rohrablaufbock gehalterte Rohrabschnitt wird abgekippt und anschließend läuft die Produktion der Wickelfalzrohrmaschine erneut an.

## Patentansprüche

1. Vorrichtung zum Trennen von sich um ihre Achse drehenden Rohren (7, 7'), vorzugsweise zum Abtrennen von Rohrabschnitten von Wickelfalzrohren von einem in der Herstellung befindlichen Rohrstrang,
**gekennzeichnet durch** einen quer zur Rohrachse auf Führungen (12) hin- und herverfahrbaren Schlitten (20, 21), auf dem in der Trennebene ein Fräser (26) und eine Schere (28) gehaltert sind, die **durch** gesteuerte Antriebe unabhängig voneinander in Richtung auf das Rohr (7, 7') und zurück verfahrbar sind.

2. Vorrichtung nach Anspruch 1, **dadurch gekennzeichnet, daß** der Fräser (26) ein Stiftfräser ist.

3. Vorrichtung nach Anspruch 1 oder 2, **dadurch gekennzeichnet, daß** die Schere (28) aus zwei gabelförmig angeordneten, an den Rohrmantel anstellbaren Backen (30) besteht, zwischen die eine den Rohrmantel durchsetzende Schneidzunge (31) eintaucht.

4. Vorrichtung nach einem der Ansprüche 1 bis 3, **dadurch gekennzeichnet, daß** die den Fräser (26) und die Schere (28) mit ihren An- und Abstelleinrichtungen halternde Einrichtung (24) auf einem parallel zur Rohrachse verfahrbaren Schlitten angeordnet ist.

5. Vorrichtung nach einem der Ansprüche 1 bis 3, **dadurch gekennzeichnet, daß** die den Fräser und die Schere mit ihren An- und Abstelleinrichtungen halternde Einrichtung auf einem quer zur Rohrachse verfahrbaren Schlitten angeordnet ist, der seinerseits auf einem parallel zur Rohrachse verschieblichen Schlitten geführt ist.

6. Vorrichtung nach einem der Ansprüche 1 bis 5, **dadurch gekennzeichnet, daß** eine Steuerung vorgesehen ist, die den Fräser (26) vor der Schere (28) derart in den Einsatz bringt, daß dieser den Falz durchtrennt und anschließend die Schere (28) in den gefrästen Schlitz einführt, die nach dem Zurückfahren des Fräsers den falzfreien Umfangsteil des Rohrmantels durchtrennt.

7. Vorrichtung nach einem der Ansprüche 1 bis 6, **dadurch gekennzeichnet, daß** die Steuerung den parallel zum Rohr verfahrbaren Schlitten mit der Rohrgeschwindigkeit verfährt.

8. Vorrichtung nach einem der Ansprüche 1 bis 7, **dadurch gekennzeichnet, daß** das Rohr während des Eindringens des Fräsers in den Rohrmantel stillsteht oder sich nur mit verringerter Produktionsgeschwindigkeit dreht und in axialer Richtung bewegt.

9. Vorrichtung nach Anspruch 8, **dadurch gekennzeichnet, daß** die Produktionsgeschwindigkeit nach dem Eindringen des Fräsers durch den Rohrmantel wieder erhöht wird.

10. Vorrichtung nach einem der vorhergehenden Ansprüche, **dadurch gekennzeichnet, daß** die Produktionsgeschwindigkeit bei dem Schneiden mit der Schere gegenüber der Geschwindigkeit beim Schneiden mit dem Fräser erhöht wird.

11. Vorrichtung nach einem der Ansprüche 1 bis 10, **dadurch gekennzeichnet, daß** die Steuerung aus einem Rechner, z.B. einer SPS-Steuerung, besteht.

12. Vorrichtung nach einem der Ansprüche 1 bis 11, **dadurch gekennzeichnet, daß** die Steuerung den Einsatz des Fräsers und der Schere und die Geschwindigkeit der den Fräser und die Schere tragenden Schlitten in Abhängigkeit von der Geschwindigkeit des in die Wickelfalzrohrmaschine einlaufenden Metallbandes steuert.

## Claims

1. Apparatus for cutting tubes (7, 7') rotating about their axis, preferably for severing tube sections from folded spiral-seam tubes from a tube stream during manufacture,
**characterized by** a carriage (20, 21) which can be moved to and fro on guides (12) transversely with respect to the tube axis and on which, in the cutting plane, a milling tool (26) and shears (28) are held, which can be moved in the direction of the tube (7,7') and back independently of one another by controlled drives.

2. Apparatus according to Claim 1, **characterized in that** the milling tool (26) is a hollow mill.

3. Apparatus according to Claim 1 or 2, **characterized in that** the shears (28) comprise two jaws (30) which are arranged in the shape of a fork, can be set against the circumference of the tube and between which a cutting tongue (31) which passes through the circumference of the tube penetrates.

4. Apparatus according to one of Claims 1 to 3, **characterized in that** the device (24) which holds the milling tool (26) and the shears (28), together with their setting-on and setting-off devices, is arranged on a carriage which can be moved parallel to the tube axis.

5. Apparatus according to one of Claims 1 to 3, **characterized in that** the device which holds the milling tool and the shears, together with their setting-on and setting-off devices, is arranged on a carriage which can be moved transversely with respect to the tube axis and which in turn is guided on a carriage which can be displaced parallel to the tube axis.

6. Apparatus according to one of Claims 1 to 5, **characterized in that** a control system is provided which brings the milling tool (26) into use before the shears (28), **in that** the said milling tool severs the fold and then introduces the shears (28) into the milled slot, the said shears severing the fold-free circumferential part of the outer of the tube after the milling tool has been moved back.

7. Apparatus according to one of Claims 1 to 6, **characterized in that** the control system moves the carriage that can be moved parallel to the tube at the speed of the tube.

8. Apparatus according to one of Claims 1 to 7, **characterized in that**, as the milling tool penetrates into the outer of the tube, the tube is at a standstill or rotates and moves in the axial direction only at a reduced production speed.

9. Apparatus according to Claim 8, **characterized in that** the production speed is increased again after the milling tool has penetrated through the outer of the tube.

10. Apparatus according to one of the preceding claims, **characterized in that** the production speed during cutting with the shears is increased as compared with the speed when cutting with the milling tool.

11. Apparatus according to one of Claims 1 to 10, **characterized in that** the control system comprises a computer, for example a PLC control system.

12. Apparatus according to one of Claims 1 to 11, **characterized in** the control system controls the use of the milling tool and the shears, and the speed of the carriage that carries the milling tool and the shears, as a function of the speed of the metal strip running into the folded spiral-seam tube machine.

## Revendications

1. Dispositif pour couper des tubes (7, 7') tournant autour de leur axe, de préférence pour couper des tronçons tubulaires de tuyaux métalliques agrafés d'un faisceau de tube en fabrication, **caractérisé par** un chariot (20, 21) déplaçable selon un mouvement alternatif transversalement à l'axe du tube sur des guidages (12), sur lequel sont retenus dans le plan de séparation une fraise (26) et des ciseaux (28) qui sont déplaçables par des organes d'entraînement commandés indépendamment l'un de l'autre en direction du tube (7, 7') et au loin de celui-ci.

2. Dispositif selon la revendication 1, **caractérisé en ce que** la fraise (26) est une fraise à goupille.

3. Dispositif selon la revendication 1 ou 2, **caractérisé en ce que** les ciseaux (28) sont constitués de deux mâchoires (30) disposées en forme de fourche, applicables à l'enveloppe du tube, entre lesquelles plonge une languette de coupe (31) traversant l'enveloppe du tube.

4. Dispositif selon l'une des revendications 1 à 3, **caractérisé en ce que** l'installation (24) retenant la fraise (26) et les ciseaux (28) avec leurs installations de rapprochement et d'éloignement (24) est disposée sur un chariot déplaçable parallèlement à l'axe du tube.

5. Dispositif selon l'une des revendications 1 à 3, **caractérisé en ce que** l'installation retenant la fraise et les ciseaux avec leurs installations de rapprochement et d'éloignement est disposée sur un chariot déplaçable transversalement à l'axe du tube, qui lui est guidé sur un chariot déplaçable parallèlement à l'axe du tube.

6. Dispositif selon l'une des revendications 1 à 5, **caractérisé en ce qu'**une commande est prévue qui met en service la fraise (26) avant les ciseaux (28) de telle sorte que celle-ci coupe l'agrafe et insère ensuite les ciseaux (28) dans la fente fraisée qui coupe après le retrait de la fraise la partie périphérique exempte d'agrafe de l'enveloppe du tube.

7. Dispositif selon l'une des revendications 1 à 6, **caractérisé en ce que** la commande déplace le chariot déplaçable parallèlement au tube avec la vitesse du tube.

8. Dispositif selon l'une des revendications 1 à 7, **caractérisé en ce que** le tube, pendant la pénétration de la fraise, est immobile dans l'enveloppe du tube ou tourne seulement à une vitesse de production réduite et se déplace dans la direction axiale.

9. Dispositif selon la revendication 8, **caractérisé en ce que** la vitesse de production est de nouveau augmentée après la pénétration de la fraise à travers l'enveloppe du tube.

10. Dispositif selon l'une des revendications précédentes, **caractérisé en ce que** la vitesse de production lors de la coupe avec les ciseaux est augmentée par rapport à la vitesse lors de la coupe avec la fraise.

11. Dispositif selon l'une des revendications 1 à 10, **caractérisé en ce que** la commande est constituée d'un calculateur, par exemple d'une commande SPS.

12. Dispositif selon l'une des revendications 1 à 11, **caractérisé en ce que** l'organe de commande commande l'utilisation de la fraise et des ciseaux et la vitesse des chariots supportant la fraise et les ciseaux en fonction de la vitesse de la bande métallique entrant dans la machine de fabrication de tuyaux métalliques agrafés.
